# EUROPÄISCHE PATENTSCHRIFT

(11) **EP 3 639 095 B1**
(45) Veröffentlichungstag und Bekanntmachung des Hinweises auf die Patenterteilung: **30.03.2022**
(21) Anmeldenummer: 18723002.4
(22) Anmeldetag: 08.05.2018
(51) Int. Cl.: G05B 19/042, G08C 17/02, H02J 50/10, H04B 5/00

(54) **FELDGERÄT DER AUTOMATISIERUNGSTECHNIK**
AUTOMATION FIELD DEVICE
APPAREIL DE TERRAIN DE LA TECHNIQUE D'AUTOMATISATION

(30) Priorität: 13.06.2017 DE 102017112972
(43) Veröffentlichungstag der Anmeldung: 22.04.2020
(73) Patentinhaber: Endress+Hauser SE+Co. KG, 79689 Maulburg (DE)
(72) Erfinder: SCHÄUBLE, Harald, 79541 Lörrach (DE); GERWIG, Simon, 79650 Schopfheim (DE); PAUL, Tobias, 79650 Schopfheim (DE); GEIB, Patrick, 79713 Bad Säckingen (DE)
(74) Vertreter: Andres, Angelika Maria
(86) Internationale Anmeldenummer: PCT/EP2018/061879
(87) Internationale Veröffentlichungsnummer: WO 2018/228752

(56) Entgegenhaltungen:
- DE-A1-102011 082 002
- US-A1- 2009 001 930
- US-A1- 2015 326 070
- US-A1- 2017 156 022

## Beschreibung

Die Erfindung bezieht sich auf ein Feldgerät der Automatisierungstechnik sowie ein Verfahren zum Bedienen eines solchen Feldgerätes der Automatisierungstechnik.

In der Prozessautomatisierungstechnik ebenso wie in der Fertigungsautomati-sierungstechnik werden üblicherweise Feldgeräte eingesetzt, die zur Erfassung und/oder Beeinflussung von Prozessgrößen dienen. Zur Erfassung von Prozessgrößen dienen Messgeräte bzw. Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Eine Vielzahl solcher Feldgeräte wird von der Endress + Hauser-Gruppe hergestellt und vertrieben.

Darüber hinaus ist bekannt, die Feldgeräte in einer so genannten Zweileiter-Technik (ggfl. auch einer Vierleiter-Technik) aufzubauen und miteinander zu verbinden, so dass die Energiespeisung und die Kommunikation der Prozessgröße über ein einziges Paar Leitungen (Zweidrahtleitung) erfolgen kann. Hierfür weisen die Feldgeräte für gewöhnlich einen analogen Strom- oder Spannungsausgang auf, bspw. einen 4 bis 20 mA Stromausgang.

Ebenfalls bekannt ist, dass die Arbeitsweise eines Feldgeräts mit Hilfe von Parametern festgelegt wird, die in hierfür vorgesehene Module bzw. spezifische Speicherstellen des Feldgeräts geschrieben werden. Durch das Speichern von geeigneten Parameterwerten in den jeweiligen Modulen bzw. Speicherstellen wird die Arbeitsweise des Feldgeräts festgelegt. Hierzu werden zunehmend mobile Bediengeräte, wie bspw. Smartphones, Tablets, etc. eingesetzt. Der ganze Vorgang wird als "Parametrieren bzw. Parametrierung" bezeichnet. Die Festlegung der Parameter wird beispielsweise vom Kunden durchgeführt. Durch die Auswahl geeigneter Parameterwerte kann der Kunde das Feldgerät an seine jeweilige Applikation anpassen. Derartige Parameter sind beispielsweise im Falle eines Füllstandmessgeräts, welches den Füllstand eines Mediums in einem Tank messen soll, die Höhe oder auch der Durchmesser des Tanks.

Damit eine mobile Bedieneinheit weiß, welche Parameter überhaupt in dem Feldgerät eingestellt werden können, werden sogenannte Gerätebeschreibungsdateien benötigt. Die Gerätebeschreibungsdateien beinhalten die zur Verfügung stehenden Parameter und Wertebereiche, die an dem jeweiligen Feldgeräte eingestellt werden können. Diese müssen vor der eigentlichen Parametrierung auf der mobilen Bedieneinheit verfügbar gemacht, d.h. gespeichert, und in eine zur Parametrierung spezielle Software installiert werden.

Damit die benötige Gerätebeschreibungsdatei bei der Parametrierung zur Verfügung steht, können diese im Vorfeld, also vor dem eigentlichen Parametrieren und abseits des zu parametrierenden Feldgerätes, auf der mobilen Bedieneinheit aufgespielt werden. Nachteilig an dieser Lösung ist, dass aufgrund dessen, dass es eine Vielzahl unterschiedlicher Feldgeräte und Gerätebeschreibungsdateien gibt, nicht garantiert werden kann, dass die zu dem Feldgerät passende Gerätebeschreibungsdatei im Vorfeld aufgespielt wurde. Um diese Problematik zu umgehen, ist es ebenfalls bekannt, dass die Gerätebeschreibungsdatei Vorort, d.h. in unmittelbarer Nähe zu dem Feldgerät, und vor dem Parametrieren des Feldgerätes durch die mobile Bedieneinheit von einem Server über das mobile Internet heruntergeladen wird. Beispielsweise kann über die Seriennummer des zu parametrierenden Feldgerätes die passende Gerätebeschreibungsdatei herausgefunden werden und diese anschließend bei einer bestehenden Internetverbindung heruntergeladen werden.

Nachteilig an dieser Lösung ist, dass es einer bestehenden Internetverbindung bzw. mobilem Internet bedarf. Dies ist insbesondere unter dem Aspekt nachteilig, dass die Feldgeräte häufig in riesigen Automatisierungsanlagen stehen, die zum einen den Aufbau einer drahtlosen Internetverbindung hemmen und zum anderen oftmals in geografischen Gebieten stehen, in denen es kein oder nur ein sehr eingeschränktes mobiles Internet gibt. Weiterhin ist bei dieser Variante nachteilig, dass aufgrund der Größe der Geräteschreibungsdatei mit einer erheblichen Wartezeit für das Herunterladen gerechnet werden.

Aus dem Stand der Technik sind ferner die DE 10 2011 082002 A1 sowie die US 2009/001930 A1 bekannt geworden.

Die DE 10 2011 082002 A1 beschreibt ein Verfahren zur drahtlosen Datenübertragung zwischen einem ersten und einem zweiten Übertragungsteilnehmer mittels zwei unterschiedlicher Protokolle über eine Antenne.

Die US 2009/001930 A1 beschreibt eine Vorrichtung zum Empfangen von elektromagnetisch induziertem Strom, wobei die Vorrichtung ein Antennenelement zum Empfangen von elektromagnetisch induziertem Strom in einem ersten Vorrichtungsbetriebsmodus und auch zur Nahfeldkommunikation in einem zweiten Vorrichtungsbetriebsmodus umfasst.

Es ist somit eine Aufgabe der Erfindung das Bedienen, insbesondere Parametrieren eines Feldgerätes der Automatisierungstechnik zu vereinfachen.

Die Aufgabe wird durch ein Feldgerät der Automatisierungstechnik gemäß Anspruch 1 sowie durch ein Verfahren zum Bedienen eines Feldgerätes der Automatisierungstechnik gemäß Anspruch 6 gelöst. Vorteilhafte Weiterbildungen der Erfindung sind in den Unteransprüchen angegeben.

Gemäß der vorliegenden Erfindung wird ein Feldgerät der Automatisierungstechnik bereitgestellt, welches zumindest folgendes aufweist:
- ein Gehäuse;
- eine innerhalb des Gehäuses angeordnete Feldgerätelektronik, der über eine Zweidrahtleitung oder eine Vierdrahtleitung eine maximale Leistung zur Verfügung gestellt wird;
- ein, vorzugsweise innerhalb des Gehäuses angeordnetes, Speicherelement zum Speichern und/oder Lesen von Daten, welches zum Austausch der Daten und/oder zur Energieversorgung mit der Feldgeräteelektronik elektrisch verbunden oder verbindbar ist und zumindest beim Speichern der Daten eine Leistung benötigt, die zumindest zeitweise höher als die über die Zweidrahtleitung oder die Vierdrahtleitung zur Verfügung gestellt maximale Leistung ist;
- eine zweite Antenne, die dazu eingerichtet ist, die Daten drahtlos zu kommunizieren und mit der Feldgeräteelektronik auszutauschen;
dadurch gekennzeichnet, dass
- eine erste NFC-Antenne die dazu eingerichtet ist, eine Hilfsenergie drahtlos zu empfangen und die Hilfsenergie der Feldgeräteelektronik zur Verfügung zu stellen;
wobei die Feldgeräteelektronik ferner dazu eingerichtet ist, das Speicherelement mit der Hilfsenergie zu versorgen, zumindest in dem Fall, dass Daten über die zweite Antenne empfangen werden und in dem Speicherelement gespeichert werden sollen.

Erfindungsgemäß wird vorgeschlagen das Feldgerät mit zwei Antennen auszustatten, wobei die erste Antenne eine NFC-Antenne ist, die ausschließlich dazu eingerichtet ist, Energie in das Feldgerät einzubringen und die zweite Antenne dazu eingerichtet ist, Daten drahtlos zu kommunizieren, d.h. zu empfangen und/oder senden. Durch das Einbringen der Energie als Hilfsenergie über die erste NFC-Antenne in das Feldgerät, kann ein Speicherelement zum Speichern und/oder Lesen von Daten in dem Feldgerät betrieben werden, welches ohne das Einbringen der Hilfsenergie nicht ausreichend mit Energie versorgt werden könnte. Dies bietet insbesondere bei Zweileiterfeldgeräten, bei denen das interne Energiebudget sehr begrenzt ist, den Vorteil, dass Speicherelemente eingesetzt werden können, die einen größeren Energiebedarf aufweisen als Energie durch die Zweidrahtleitung zur Verfügung gestellt werden kann. Das erfindungsgemäße Feldgerät wird somit derartig betrieben, dass ausschließlich Energie und keine Daten über die erste NFC-Antenne eingebracht wird, wohingegen die Daten über die zweite Antenne kommuniziert werden.

Eine vorteilhafte Ausgestaltung der Erfindung sieht vor, dass die zweite Antenne und/oder die Feldgeräteelektronik ferner dazu eingerichtet ist, die Daten gemäß einem Bluetooth-Standard oder einer auf dem Bluetooth-Standard basierenden Variante, bspw. Bluetooth 4.0 oder höher, drahtlos zu übertragen.

Eine vorteilhafte Ausgestaltung der Erfindung sieht vor, dass das Speicherelement an einen an dem Gehäuse befindlichen Stecker ansteckbar ist, so dass das Speicherelement durch Anstecken an den Stecker mit der Feldgeräteelektronik elektrisch verbunden ist.

Eine vorteilhafte Ausgestaltung der Erfindung sieht vor, dass das Speicherelement ein serieller Flashspeicher umfasst. Derartige serielle Flashspeicher sind üblicherweise in der NOR-Flash Technologie aufgebaut, die über eine serielle Schnittstelle, wie bspw. SPI, I2C, angesprochen werden, so dass nicht mehr als 8 Pins benötigt werden.

Eine vorteilhafte Ausgestaltung der Erfindung sieht vor, dass die erste NFC-Antenne ferner dazu eingerichtet ist, ausschließlich die Hilfsenergie, und insbesondere keine Daten, drahtlos zu empfangen, so dass der Feldgeräteelektronik ausschließlich die Hilfsenergie durch die erste NFC-Antenne zur Verfügung gestellt wird.

Gemäß der vorliegenden Erfindung wird ferner ein Verfahren zum Bedienen eines Feldgerätes der Automatisierungstechnik, insbesondere nach einer der zuvor beschriebenen Ausgestaltungen, durch ein mobiles Bediengerät bereitgestellt, wobei das Feldgerät durch eine Zweidrahtleitung oder eine Vierdrahtleitung mit einer maximalen Leistung versorgt wird und das Verfahren folgende Schritte aufweist:
- Anordnen eines mobilen Bediengerätes in Funkreichweite zu einer ersten NFC-Antenne des Feldgerätes;
- Zuführen einer Hilfsenergie über eine erste NFC-Antenne des Feldgerätes durch ein in Funkreichweite zu der ersten NFC-Antenne angeordnetes mobiles Bediengerät, wobei die Hilfsenergie einer Feldgerätelektronik zur Energieversorgung eines Speicherelementes über die erste NFC-Antenne zugeführt wird, so dass das Speicherelement zumindest zum Speichern und/oder Lesen von Daten mit einer ausreichenden Leistung versorgt wird;
- Übertragen von Daten zwischen einer zweiten Antenne des Feldgerätes und einem mobilen Bediengerät während die Hilfsenergie zugeführt wird;
- Speichern bzw. Auslesen der Daten in dem bzw. aus dem Speicherelement, wobei das Speicherelement zum Speichern bzw. Auslesen der Daten mit der über die erste NFC-Antenne übertragenen Hilfsenergie versorgt wird.

Eine vorteilhafte Ausführungsform der Erfindung sieht vor, dass durch das Übertragen der Daten zwischen der zweiten Antenne und dem mobilen Bediengerät zumindest eine Firmware oder Teile davon von dem mobilen Bediengerät in das Speicherelement geschrieben bzw. gespeichert wird.

Eine vorteilhafte Ausführungsform der Erfindung sieht vor, dass durch das Übertragen der Daten zwischen der zweiten Antenne und dem mobilen Bediengerät zumindest eine Gerätebeschreibungsdatei von dem Speicherelement auf das mobile Bediengerät übertragen wird, so dass nach der Übertragung die Gerätebeschreibungsdatei auf der mobilen Bedieneinheit zur Verfügung steht und das Feldgerät durch das mobile Bediengerät mit Hilfe der Gerätebeschreibungsdatei bedient werden kann. Insbesondere kann die Ausführungsform vorsehen, dass das Feldgerät durch das mobile Bediengerät parametriert wird und zum Parametrieren die auf das mobile Bediengerät übertragene Gerätebeschreibungsdatei verwendet wird.

Die Erfindung wird anhand der nachfolgenden Zeichnungen näher erläutert. Es zeigt:
Fig. 1: eine schematische Darstellung des erfindungsgemäßen Feldgerätes der Automatisierungstechnik, und
Fig. 2: eine schematische Darstellung des erfindungsgemäßen Verfahrens.

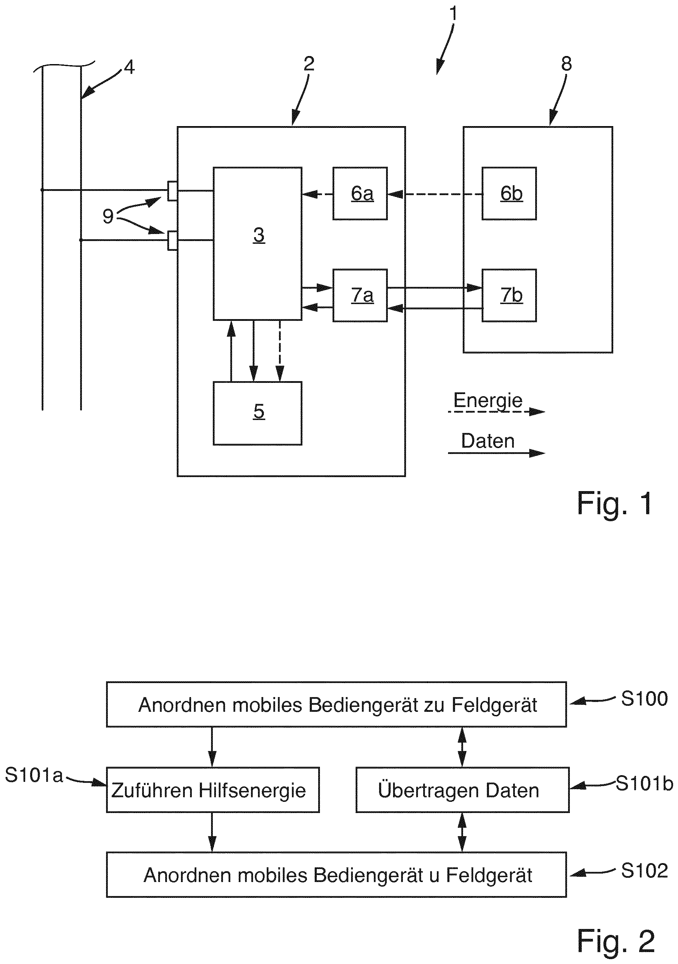

Figur 1 zeigt eine schematische Darstellung eines erfindungsgemäßen Zweileiterfeldgerätes der Automatisierungstechnik 1. Dieses umfasst ein Feldgerätegehäuse 2 mit zwei Anschlussklemmen 9, über welches das Zweileiterfeldgerät 1 von einem angeschlossenen Zweileiter 4 teilweise mit Energie versorgt wird. Die über die Anschlussklemmen 9 übertragene Energie, im Folgenden auch als Hauptenergie bezeichnet, wird von einer innerhalb des Feldgerätegehäuses 2 angeordneten Feldgeräteelektronik 3 aufgenommen und innerhalb des Feldgerätes 1 an die entsprechenden Komponenten verteilt. Die Feldgeräteelektronik 3 dient unter anderem dazu, einen Messwert aufzubereiten, so dass dieser ebenfalls über den Zweileiter 4, bspw. an eine übergeordnete Einheit, übertragen werden kann. Die Feldgeräteelektronik 3 dient ferner dazu, das Feldgerät 1 zu parametrieren, so dass es an den gewünschten Einsatzzweck angepasst werden kann. Hierzu können Parameter und deren Wertebereiche mit Hilfe der Feldgeräteelektronik 3 eingestellt werden. Eine solche Parametrierung findet insbesondere bei der Erstinbetriebnahme statt, bei der das Feldgerät 1 an den vorgesehenen Einsatzzweck angepasst wird. Für gewöhnlich wird die Erstinbetriebnahme von einem Servicetechniker Vorort, d.h. in unmittelbarer Nähe zu dem Feldgerät, vorgenommen.

Damit der Servicetechniker mit der Feldgeräteelektronik 3 kommunizieren kann, weist das Feldgerät 1 eine Antenne zur Datenübertragung 7a auf. Die Antenne 7a und die Feldgerätelektronik 3 können bspw. derartig zusammenspeilen und dazu eingerichtet sein, Daten gemäß einem Bluetooth-Standard oder einer auf dem Bluetooth-Standard basierenden Variante, bspw. Bluetooth 4.0 oder höher, drahtlos zu übertragen.

Die Übertragung der Daten erfolgt hierbei mittels einer mobilen Bedieneinheit 8, bspw. einem Smartphone oder Tablet. Auf der mobilen Bedieneinheit 8 ist zum Datenaustausch, insbesondere zum Parametrieren, eine spezielle Software installiert, die explizit auf das vorliegende Feldgerät angepasst ist. Die Anpassung der Software findet über eine eingangs bereits erwähnte Gerätebeschreibungsdatei statt, die die an dem jeweiligen Feldgeräte zur Verfügung stehenden Parameter und Wertebereiche angibt.

Die Gerätebeschreibungsdatei kann bspw. in einem internen, d.h. einen innerhalb des Feldgerätegehäuses 2 angeordneten Speicherelement 5 abgelegt bzw. gespeichert sein. Das interne Speicherelement 5 kann als serieller Flashspeicher, der auf einer NOR-Flash Technologie basiert, ausgebildet sein und bspw. über eine serielle Schnittstelle, wie SPI, I2C, mit der Feldgeräteelektronik kommunizieren. Alternativ kann das Speicherelement auch als ansteckbares Speicherelement, bspw. in Form eines USB-Speichersticks oder einer SD-Speicherkarte, ausgebildet sein, welches über einen an dem Feldgerätegehäuse befindlichen Stecker angeschlossen wird.

Da bei derartigen Speicherelementen 5 die über den Zweileiter zugeführte Hauptenergie nicht zur Energieversorgung ausreicht, weist das Feldgerät eine zusätzliche Antenne auf. Die zusätzliche Antenne 6a ist in Form einer Nahfeldkommunikationsantenne (NFC-Antenne) derartig eingerichtet, dass sie zur reinen drahtlosen Energieübertragung dient. Über die NFC-Antenne 6a kann dem Feldgerät somit eine Hilfsenergie zugeführt werden, die dem Speicherelement 5 während des Lese- oder Schreibvorgangs bereitgestellt wird. Die Übertragung der Hilfsenergie erfolgt wiederum, genau wie die Übertragung der Daten durch die mobile Bedieneinheit 8. Es versteht sich von selbst, dass die mobile Bedieneinheit 8 somit auch zwei voneinander unterschiedlich ausgebildete Antennen 6b und 7b, eine zur Übertragung von Daten einerseits und eine zur ausschließlichen Übertragung von Energie andererseits, aufweisen muss.

Mit Hilfe einer derartig ausgebildeten mobilen Bedieneinheit 8 lässt sich das Feldgerät somit bedienen. Fig. 2 zeigt hierfür einen schematischen Verfahrensablauf, welcher aus drei Schritten besteht.

In einem ersten Schritt S100 muss das mobile Bediengerät 8 mit seiner NFC-Antenne 6b in Funkreichweite zu der ersten NFC-Antenne 6a des Feldgerätes 1 gebracht werden. Dies kann bspw. durch einen Servicetechniker Vorort erfolgen.

Anschließend wird in einem zweiten Schritt S101a, über die erste NFC-Antenne des Feldgerätes 6a durch das mobile Bediengerät 8 die Hilfsenergie zugeführt. Die zugeführte Hilfsenergie wird innerhalb des Feldgerätes 1 an das Speicherelement 5 durch die Feldgeräteelektronik 3 verteilt, so dass
Speicherelement durch die zugeführte Hilfsenergie betrieben werden kann.

Anschließend können in einem weiteren Schritt S102 Daten aus dem Speicherelement ausgelesen und/oder in das Speicherelement geschrieben werden. Parallel zu der Energieübertragung in dem Schritt S101a findet in einem weiteren Schritt S101b, welcher im Wesentlichen zeitgleich ausgeführt wird, die Übertragung der Daten zwischen dem mobilen Bediengerät 8 und dem Speicherelement 5 über die Antenne zur Datenübertragung 7a bzw. 7b statt.

Auf diese Weise kann bspw. eine in dem Speicherelement 5 hinterlegte Gerätebeschreibungsdatei auf das mobile Bediengerät 8 übertragen werden. Die Übertragung erfolgt hierbei über die Antenne zur Datenübertragung 7a bzw. 7b während das Speicherelement 5 konstant mit der Hilfsenergie betrieben wird. Nach Abschluss des Übertragens der Gerätebeschreibungsdatei auf das mobile Bediengerät 8 kann die spezielle Software zur Parametrierung an das vorliegende Feldgerät durch die Gerätebeschreibungsdatei angepasst werden. Abschließend kann durch die auf das Feldgerät 1 angepasste Software eine Parametrierung des Feldgerätes 1 durchgeführt werden.

## Patentansprüche

1. Feldgerät der Automatisierungstechnik (1), aufweisend:
- ein Gehäuse (2);
- eine innerhalb des Gehäuses angeordnete Feldgerätelektronik (3), der über eine Zweidrahtleitung (4) oder eine Vierdrahtleitung eine maximale Leistung zur Verfügung gestellt wird;
- ein, vorzugsweise innerhalb des Gehäuses (2) angeordnetes, Speicherelement (5) zum Speichern von Daten, welches zum Austausch der Daten und/oder zur Energieversorgung mit der Feldgeräteelektronik (3) elektrisch verbunden oder verbindbar ist und zumindest beim Speichern der Daten eine Leistung benötigt, die zumindest zeitweise höher als die über die Zweidrahtleitung (4) oder die Vierdrahtleitung zur Verfügung gestellt maximale Leistung ist;
- eine zweite Antenne (7a), die dazu eingerichtet ist, die Daten drahtlos zu kommunizieren und mit der Feldgeräteelektronik (3) auszutauschen;
**dadurch gekennzeichnet, dass**
- eine erste NFC-Antenne (6a) die dazu eingerichtet ist, eine Hilfsenergie drahtlos zu empfangen und die Hilfsenergie der Feldgeräteelektronik (3) zur Verfügung zu stellen;
wobei die Feldgeräteelektronik (3) ferner dazu eingerichtet ist, das Speicherelement (5) mit der Hilfsenergie zu versorgen, zumindest in dem Fall, dass Daten über die zweite Antenne (7) empfangen werden und in dem Speicherelement (5) gespeichert werden sollen.

2. Feldgerät nach Anspruch 1, wobei die zweite Antenne (7) und/oder die Feldgeräteelektronik (3) ferner dazu eingerichtet ist, die Daten gemäß einem Bluetooth-Standard oder einer auf dem Bluetooth-Standard basierenden Variante, bspw. Bluetooth 4.0 oder höher, drahtlos zu übertragen.

3. Feldgerät nach einem oder mehreren der vorhergehenden Ansprüche, wobei das Speicherelement (5) an einen an dem Gehäuse (2) befindlichen Stecker ansteckbar ist, so dass das Speicherelement (5) durch Anstecken an den Stecker mit der Feldgeräteelektronik (3) elektrisch verbunden ist.

4. Feldgerät nach einem oder mehreren der vorhergehenden Ansprüche, wobei das Speicherelement (5) ein serieller Flashspeicher umfasst.

5. Feldgerät nach einem oder mehreren der vorhergehenden Ansprüche, wobei die erste NFC-Antenne (6) ferner dazu eingerichtet ist, ausschließlich die Hilfsenergie, und insbesondere keine Daten, drahtlos zu empfangen, so dass durch die erste NFC-Antenne (6) ausschließlich die Hilfsenergie drahtlos übertragen wird.

6. Verfahren zum Bedienen eines Feldgerätes der Automatisierungstechnik (1), insbesondere nach zumindest einem der vorhergehenden Ansprüche, durch ein mobiles Bediengerät (8), wobei das Feldgerät (1) durch eine Zweidrahtleitung (4) oder eine Vierdrahtleitung (4) mit einer maximalen Leistung versorgt wird und das Verfahren folgende Schritte aufweist:
- Anordnen eines mobilen Bediengerätes in Funkreichweite zu einer ersten NFC-Antenne des Feldgerätes (S100);
- Zuführen einer Hilfsenergie über eine erste NFC-Antenne des Feldgerätes durch ein in Funkreichweite zu der ersten NFC-Antenne angeordnetes mobiles Bediengerät (S101a), wobei die Hilfsenergie einer Feldgerätelektronik zur Energieversorgung eines Speicherelementes über die erste NFC-Antenne zugeführt wird, so dass das Speicherelement zumindest zum Speichern und/oder Lesen von Daten mit einer ausreichenden Leistung versorgt wird;
- Übertragen von Daten zwischen einer zweiten Antenne des Feldgerätes und einem mobilen Bediengerät während die Hilfsenergie zugeführt wird (S101b);
- Speichern bzw. Auslesen der Daten in dem bzw. aus dem Speicherelement (S102), wobei das Speicherelement zum Speichern bzw. Auslesen der Daten mit der über die erste NFC-Antenne übertragenen Hilfsenergie versorgt wird.

7. Verfahren nach dem vorhergehenden Anspruch, wobei durch das Übertragen der Daten zwischen der zweiten Antenne und dem mobilen Bediengerät zumindest eine Firmware oder Teile davon von dem mobilen Bediengerät in das Speicherelement geschrieben bzw. gespeichert wird.

8. Verfahren nach einem der Ansprüche 6 und/oder 7, wobei zwischen der zweiten Antenne und dem mobilen Bediengerät zumindest eine Gerätebeschreibungsdatei von dem Speicherelement auf das mobile Bediengerät übertragen wird, so dass nach der Übertragung die Gerätebeschreibungsdatei auf der mobilen Bedieneinheit zur Verfügung steht und das Feldgerät durch das mobile Bediengerät mit Hilfe der Gerätebeschreibungsdatei bedient werden kann.

9. Verfahren nach dem vorhergehenden Anspruch, wobei das Feldgerät durch das mobile Bediengerät parametriert wird und zum Parametrieren die auf das mobile Bediengerät übertragene Gerätebeschreibungsdatei verwendet wird.

10. Verfahren nach zumindest einem der Ansprüche 6 bis 9, wobei das Zuführen der Hilfsenergie über die erste NFC-Antenne und das Übertragen von Daten über die zweite Antenne parallel, insbesondere zeitlich parallel, durchgeführt wird.

## Claims

1. Field device used in automation engineering (1), comprising:
- a housing (2);
- a field device electronics unit (3) arranged inside the housing, wherein a maximum power is supplied to said unit via a two-wire line (4) or four-wire line;
- a storage element (5), preferably arranged inside the housing (2), designed to save data, wherein said element is electrically connected or can be electrically connected to the field device electronics unit (3) for the purpose of exchanging data and/or supplying energy and which, for the purpose of saving data, requires a power which is at least temporarily higher than the maximum power provided via the two-wire line (4) or four-wire line;
- a second antenna (7a), which is designed to communicate the data wirelessly and exchange the data with the field device electronics unit (3);
- a first NFC antenna (6a), which is designed to wirelessly receive an auxiliary energy and to make the auxiliary energy available to the field device electronics unit (3);
wherein the field device electronics unit (3) is further designed to supply auxiliary energy to the storage element (5), at least in the event that data is received via the second antenna (7) and should be saved in the storage element (5).

2. Field device as claimed in Claim 1, wherein the second antenna (7) and/or the field device electronics unit (3) is/are further designed to wirelessly transmit the data according to a Bluetooth standard or a version based on the Bluetooth standard, for example Bluetooth 4.0 or higher.

3. Field device as claimed in one or more of the previous claims, wherein the storage element (5) can be connected to a connector located on the housing (2) in such a way that the storage element (5) is electrically connected to the field device electronics unit (3) by connecting to the connector.

4. Field device as claimed in one or more of the previous claims, wherein the storage element (5) comprises a serial flash memory.

5. Field device as claimed in one or more of the previous claims, wherein the first NFC antenna (6) is further designed to wirelessly receive auxiliary energy only, and particularly not to receive any data, in such a way that only the auxiliary energy is wirelessly transmitted by the first NFC antenna (6).

6. Procedure for operating a field device used in automation engineering (1), particularly according to at least one of the previous claims, by a mobile operating device (8), wherein the field device (1) is supplied with a maximum power by a two-wire line (4) or a four-wire line (4) and wherein the procedure comprises the following steps:
- Positioning of a mobile operating device within the wireless range of a first NFC antenna of the field device (S100);
- Provision of an auxiliary energy via a first NFC antenna of the field device by a mobile operating device (S101a) arranged within the wireless range of the first NFC antenna wherein the auxiliary energy is supplied to a field device electronics unit via the first NFC antenna for the purpose of supplying energy to a storage element in such a way that sufficient auxiliary energy is supplied to the storage element at least to save and/or read data;
- Transmission of data between a second antenna of the field device and a mobile operating device while the auxiliary energy is supplied (S101b);
- Storage or reading of data in the/out of the storage element (S102)
wherein the storage element is supplied with the auxiliary energy transmitted via the first NFC antenna for the purpose of saving or reading out the data.

7. Procedure as claimed in the previous claim, wherein, as a result of the transmission of data between the second antenna and the mobile operating device, at least a firmware, or parts thereof, is/are written to or saved in the storage element by the mobile operating device.

8. Procedure as claimed in one of the Claims 6 and/or 7, wherein - between the second antenna and the mobile operating unit - at least one device description file is transmitted from the storage element to the mobile operating device in such a way that the device description file is available on the mobile operating unit after the transmission and the field device can be operated by the mobile operating device with the aid of the device description file.

9. Procedure as claimed in the previous claim, wherein the field device is configured by the mobile operating device and the device description file transmitted to the mobile operating device is used for the configuration.

10. Procedure as claimed in at least one of the Claims 6 to 9, wherein the provision of auxiliary energy via the first NFC antenna and the transmission of data via the second antenna are performed in parallel, particularly at the same time.

## Revendications

1. Appareil de terrain de la technique d'automatisation (1), lequel appareil comprend
- un boîtier (2) ;
- une électronique d'appareil de terrain (3) disposée à l'intérieur du boîtier, électronique à laquelle une puissance maximale est fournie via une ligne bifilaire (4) ou une ligne quadrifilaire ;
- un élément de mémoire (5), de préférence disposé à l'intérieur du boîtier (2), destiné à la mémorisation des données, lequel élément est relié ou peut être relié électriquement à l'électronique d'appareil de terrain (3) pour l'échange des données et/ou pour l'alimentation en énergie et qui, au moins lors de la mémorisation des données, nécessite une puissance qui est au moins temporairement supérieure à la puissance maximale mise à disposition par l'intermédiaire de la ligne bifilaire (4) ou de la ligne quadrifilaire ;
- une première antenne NFC (6a), laquelle est conçue pour recevoir sans fil une énergie auxiliaire et mettre l'énergie auxiliaire à la disposition de l'électronique d'appareil de terrain (3) ;
- une deuxième antenne (7a), laquelle est conçue pour communiquer sans fil les données et les échanger avec l'électronique d'appareil de terrain (3) ; l'électronique d'appareil de terrain (3) étant en outre conçue pour fournir l'énergie auxiliaire à l'élément de mémoire (5), au moins dans le cas où des données sont reçues via la deuxième antenne (7) et doivent être mémorisées dans l'élément de mémoire (5).

2. Appareil de terrain selon la revendication 1, pour lequel la deuxième antenne (7) et/ou l'électronique d'appareil de terrain (3) sont/est en outre conçu(es) pour transmettre sans fil les données selon une norme Bluetooth ou une variante basée sur la norme Bluetooth, par exemple Bluetooth 4.0 ou plus.

3. Appareil de terrain selon l'une ou plusieurs des revendications précédentes, pour lequel l'élément de mémoire (5) peut être enfiché sur un connecteur se trouvant sur le boîtier (2), de sorte que l'élément de mémoire (5) est relié électriquement à l'électronique d'appareil de terrain (3) par enfichage sur le connecteur.

4. Appareil de terrain selon l'une ou plusieurs des revendications précédentes, pour lequel l'élément de mémoire (5) comprend une mémoire flash série.

5. Appareil de terrain selon l'une ou plusieurs des revendications précédentes, pour lequel la première antenne NFC (6) est en outre conçue pour recevoir sans fil exclusivement l'énergie auxiliaire, et notamment aucune donnée, de sorte que seule l'énergie auxiliaire est transmise sans fil par la première antenne NFC (6).

6. Procédé destiné à l'exploitation d'un appareil de terrain de la technique d'automatisation (1), notamment selon au moins l'une des revendications précédentes, par un appareil de commande mobile (8), l'appareil de terrain (1) étant alimenté par une ligne bifilaire (4) ou une ligne quadrifilaire (4) avec une puissance maximale et le procédé comprenant les étapes suivantes :
- Disposition d'un appareil de commande mobile à portée radio d'une première antenne NFC de l'appareil de terrain (S100) ;
- Fourniture d'une énergie auxiliaire via une première antenne NFC de l'appareil de terrain par un appareil de commande mobile (S101a) disposé à portée radio de la première antenne NFC, l'énergie auxiliaire étant amenée à une électronique d'appareil de terrain en vue de l'alimentation en énergie d'un élément de mémoire via la première antenne NFC, de sorte que l'élément de mémoire est alimenté avec une puissance suffisante au moins pour la mémorisation et/ou la lecture des données ;
- Transmission de données entre une deuxième antenne de l'appareil de terrain et un appareil de commande mobile pendant que l'énergie auxiliaire est fournie (S101b) ;
- Mémorisation ou lecture des données dans ou à partir de l'élément de mémoire (S102), l'élément de mémoire étant alimenté par l'énergie auxiliaire transmise par la première antenne NFC pour la mémorisation ou la lecture des données.

7. Procédé selon la revendication précédente, pour lequel, par la transmission des données entre la deuxième antenne et l'appareil de commande mobile, au moins un firmware, ou des parties de celui-ci, est/sont écrit(s) ou enregistré(s) dans l'élément de mémoire par l'appareil de commande mobile.

8. Procédé selon l'une des revendications 6 et/ou 7, pour lequel, entre la deuxième antenne et l'appareil de commande mobile, au moins un fichier de description d'appareil est transmis de l'élément de mémoire à l'appareil de commande mobile, de sorte qu'après la transmission, le fichier de description d'appareil est disponible sur l'unité de commande mobile et l'appareil de terrain peut être commandé par l'appareil de commande mobile à l'aide du fichier de description d'appareil.

9. Procédé selon la revendication précédente, pour lequel l'appareil de terrain est paramétré par l'appareil de commande mobile et le fichier de description d'appareil transmis à l'appareil de commande mobile est utilisé pour le paramétrage.

10. Procédé selon au moins l'une des revendications 6 à 9, pour lequel la fourniture de l'énergie auxiliaire via la première antenne NFC et la transmission de données via la deuxième antenne sont réalisées en parallèle, notamment en parallèle dans le temps.
